(19) Europäisches Patentamt / European Patent Office / Office européen des brevets

(11) **EP 2 028 486 A1**

(12) **DEMANDE DE BREVET EUROPEEN**

(43) Date de publication:
**25.02.2009 Bulletin 2009/09**

(51) Int Cl.:
*G01N 30/86* [(2006.01)]     *G06F 17/18* [(2006.01)]

(21) Numéro de dépôt: **08162524.6**

(22) Date de dépôt: **18.08.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **22.08.2007 FR 0757131**

(71) Demandeur: **Commissariat A L'Energie Atomique - CEA**
**75015 Paris (FR)**

(72) Inventeurs:
• **Struvel, Grégory**
  **38000, GRENOBLE (FR)**
• **Giovannelli, Jean-François**
  **75014, PARIS (FR)**
• **Grangeat, Pierre**
  **38330, SAINT ISMIER (FR)**

(74) Mandataire: **Ilgart, Jean-Christophe**
**BREVALEX**
**3, rue du Docteur Lancereaux**
**75008 Paris (FR)**

(54) **Procédé d'estimation de concentrations de molécules dans un relevé d'échantillon et appareillage**

(57)     Ce procédé d'estimation de concentration de molécules dans une chaîne de mesure pouvant comprendre une colonne de chromatographie en phase liquide ou un spectromètre de masse se fonde sur des calculs statistiques pour transformer, dans un modèle analytique du signal reçu, les facteurs (résultats mesurés ou paramètres de mesure) en des distributions de probabilités à partir d'estimations a priori. Les valeurs définitives des résultats sont déduites à partir d'un paramètre, tel que la moyenne, de ces distributions de probabilité. La méthode excelle, à évaluer correctement des pics de mesure dans des signaux bruités ou superposés à d'autres pics, ce que les méthodes classiques d'analyse de pics ou d'analyses spectrales font mal.

FIG. 3

EP 2 028 486 A1

## EP 2 028 486 A1

**Description**

Le sujet de cette invention est un procédé d'estimation de concentrations de molécules dans un relevé d'échantillon, et l'appareillage afférent.

Certains appareils permettent de séparer la détection de différentes molécules d'un échantillon le long d'un signal qui est un spectre. Les composants détectés apparaissent typiquement sous forme de pics dont la hauteur dépend de la concentration de la molécule concernée dans l'échantillon. Les chromatographes en phase liquide et les spectromètres de masse possèdent cette propriété en séparant les molécules respectivement d'après leur temps de rétention dans la colonne et leur masse divisée par la charge. Ces appareils peuvent être utilisés conjointement, et le signal résultant est alors un spectre multiple, présentant une dispersion de pics sur un plan en fonction des deux paramètres.

Les mesures peuvent être difficiles à exploiter en raison du nombre élevé de molécules présentes dans l'échantillon et de l'existence d'isotopes qui modifient la masse de certaines des molécules mesurées par rapport à leur valeur ordinaire et altèrent les formes des pics pour donner des massifs isotopiques moins reconnaissables et moins faciles à mesurer. Une autre difficulté apparaît pour des éléments présents en très faible concentration et dont la détection est pourtant parfois nécessaire. Les analyses classiques de signaux peuvent alors être mises en échec.

Une méthode classique consiste ainsi à déduire une concentration d'une molécule d'après la hauteur ou la surface de son pic sur le signal.

Une autre méthode consiste à analyser l'ensemble du signal par une analyse spectrale en faisant des comparaisons avec une bibliothèque de spectres connus.

On conçoit que ces méthodes peuvent conduire à des résultats insuffisants pour des pics peu marqués de molécules en concentration faible, à cause du bruitage du signal ou de superposition avec des pics voisins.

D'autres méthodes sont fondées sur des estimations probabilistes comprenant notamment des analyses bayésiennes. Le problème mathématique y=Hx+b,

ou y désigne les mesures, H une matrice d'inversion, x le résultat à rechercher (grandeurs à évaluer) et b le bruit est résolu dans l'article de Kang, Preuss, Schwarz-Selinger et Dose, intitulé « Decomposition of multicomponent mass spectra using Bayesian probability theory » (paru dans Journal of mass spectrometry, volume 37, juillet 2002 pages 748,754) , en évaluant le bruit sous forme d'une fonction gaussienne de moyenne nulle et de variance déterminé ce qui conduit à une expression des grandeurs du vecteur x sous forme d'une distribution de probabilités. Les articles de Moussaoui, Brie, Mohammed-Djafari, Carteret « Separation of Non-Negative Mixture of Non-Negative Sources Using a Bayesian Approach and MCMC Sampling » (paru dans IEEE transactions on signal processing, volume 54, N°11, Novembre 2006, page 4133 à 4145) , et de Mohammad-Djafari et autres « Regularization, maximum entropy and probabilistic methods in mass spectrometry data processing problems » (paru dans International Journal of mass spectrometry, volume 215, numéro 1 à 3, 1er avril 2002, page 175 à 193), décrivent des généralisations dans lesquels les coefficients de la matrice H sont aussi considérés comme incertains et modélisés par différentes distributions de probabilités. De tels procédés mènent à des calculs importants puisque le nombre de coefficient est typiquement égal au nombre de points de mesure sur le signal multiplié par le nombre de grandeurs à évaluer. L'attribution de distributions de probabilité a priori à chacun des coefficients de la matrice est arbitraire et peut conduire à des résultats peu représentatifs. Des contraintes supplémentaires doivent généralement être introduites pour pouvoir résoudre le problème, or on manque souvent des données nécessaires pour les introduire correctement et avec précision. Il s'ensuit que ces procédés antérieurs ne garantissent pas un résultat convenable en dépit de leur volonté d'exprimer leurs résultats sous la forme plus réaliste d'une distribution de probabilités.

L'invention est fondée sur une idée différente : la modélisation du signal mesuré sous forme d'une fonction de paramètres faisant intervenir, entre autres, des facteurs de gain de l'appareillage, des facteurs de description des pics qui composent le signal (leur position sur le signal ou leur forme) et éventuellement d'autres facteurs, comme les répartitions des molécules en fonction de variation de masse atomique ou de charge électrique pour chacune d'elles, le bruit, etc. Le problème mathématique est alors résolu avec beaucoup moins d'inconnues puisque ces facteurs sont assez peu nombreux, et correspondent le plus souvent à un petit nombre de points de modélisation. Les paramètres peuvent souvent être estimés à des étapes de calibration précédant la mesure proprement dite et être évalués avec une grande précision qui permet de leur affecter des distributions de probabilités a priori fiables.

L'invention peut être mise en oeuvre avec de nombreuses variantes selon les facteurs contraintes comme incertains parmi les facteurs du modèle et auxquels on attribue donc des distributions de probabilités. Si ces facteurs sont peu nombreux, la résolution du modèle peut être simple, sinon des calculs plus compliqués seront nécessaires. Une résolution directe pourra être envisagée avec un petit nombre de facteurs incertains, mais une résolution itérative sera souvent nécessaire sinon, les distributions de probabilités dépendant alors les unes des autres : le calcul consistera à faire converger les paramètres de ces distributions de probabilités vers des valeurs limites et les résultats définitifs des concentrations seront de toute façon obtenus par une estimation prenant en compte ces paramètres.

Un avantage de l'invention est que tout le signal est utilisé dans la recherche de résultat et pas seulement des portions comprenant les pics de mesures. Un autre avantage est que le modèle est exhaustif et fiable, faisant intervenir tous les facteurs responsables de la création du signal.

Les distributions de probabilités peuvent être explicites si on les exprime par des lois classiques en statistique, ou bien obtenues empiriquement par application de nombres aléatoires si elles dépendent de fonctions complexes.

Sous sa forme la plus générale, l'invention concerne un procédé d'estimation de concentrations de molécules dans un échantillon, consistant à faire passer l'échantillon par un appareillage et à obtenir ainsi un signal consistant en au moins un spectre composé de pics, représentatif des concentrations des molécules en fonction d'au moins une variable et à estimer les concentrations des molécules ; caractérisé en ce qu'il consiste à faire une modélisation analytique du signal par une fonction de modélisation comprenant des facteurs, dont les concentrations et d'autres facteurs comprenant des facteurs de gain de l'appareillage, des facteurs de description des pics ; puis à attribuer aux concentrations et à certains des autres facteurs, qui sont des facteurs incertains, des distributions de probabilités a priori ; à déduire du signal des distributions de probabilités a posteriori pour les concentrations, en utilisant la fonction de modélisation, des estimations des autres facteurs et les distributions de probabilités a priori, et à estimer les concentrations d'après un paramètre déduit des distributions de probabilités a postériori.

Le paramètre de décision déduit des distributions a posteriori peut être une moyenne, une médiane, ou l'argument correspondant à la valeur maximale de la distribution par exemple ; les distributions de probabilités a priori peuvent comprendre des fonctions gaussiennes ou d'autres statistiques connues ; les distributions de probabilité a posteriori peuvent être de telles fonctions, ou être obtenues empiriquement par génération de nombres aléatoires.

Un autre aspect de l'invention est la répartition des facteurs du modèle analytique du signal en facteurs jugés stables (constants avec le même appareillage quelle que soit l'expérience) et instables (variables d'une expérience à l'autre). Tous ces facteurs peuvent ou non être tenus pour incertains au sens de l'invention et se voir alors appliquer des distributions de probabilités. Les facteurs stables peuvent faire l'objet d'une calibration externe consistant en une injection de molécules semblables à certaines des molécules de l'échantillon, mais à des concentrations connues, dans l'appareillage (en l'absence de l'échantillon) et à déduire d'un signal de l'injection de calibration et du modèle analytique certains des autres facteurs. Il faut souligner que la calibration externe peut aussi être accomplie par des calculs probabilistes impliquant des distributions de probabilités pour les facteurs du modèle analytique, appliqué cette fois à l'injection de calibration, sauf les concentrations des molécules qui sont cette fois bien déterminées.

L'invention peut aussi comprendre une calibration interne consistant en une injection de molécules marqueuses dans l'échantillon, les molécules marqueuses ayant respectivement des propriétés voisines de certaines des molécules de l'échantillon vis-à-vis de l'appareillage et donnant des pics de mesure proches de pics de mesures desdites certaines molécules de l'échantillon.

La répartition en facteurs stables et instables peut être décidée par l'utilisateur d'après la nature de l'appareillage, les conditions des expériences et ses connaissances propres. C'est ainsi que le gain du niveau du signal par l'appareillage est normalement instable, de même que les temps de rétention des molécules par la colonne de chromatographie quand elle est employée.

Un autre aspect de l'invention est un appareillage dans lequel le procédé est accompli pour obtenir le profil moléculaire l'échantillon.

On explicitera maintenant l'invention d'après une application pour laquelle elle a d'abord été conçue : la mesure des protéines dans des fluides biologiques, pour laquelle les problèmes précédents se manifestent avec acuité en raison du grand nombre de protéines qu'on peut rencontrer et de la très faible concentration de certaines, alors qu'une mesure précise est pourtant souhaitée car certaines d'entre elles peuvent être décisives pour asseoir un diagnostic médical ou autre. Des protéines sont ainsi des marqueurs de cancers.

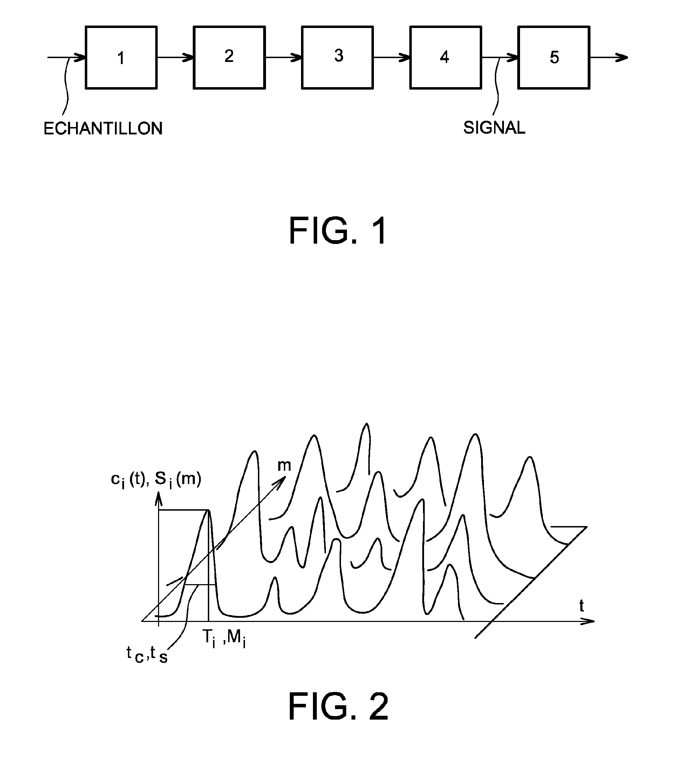

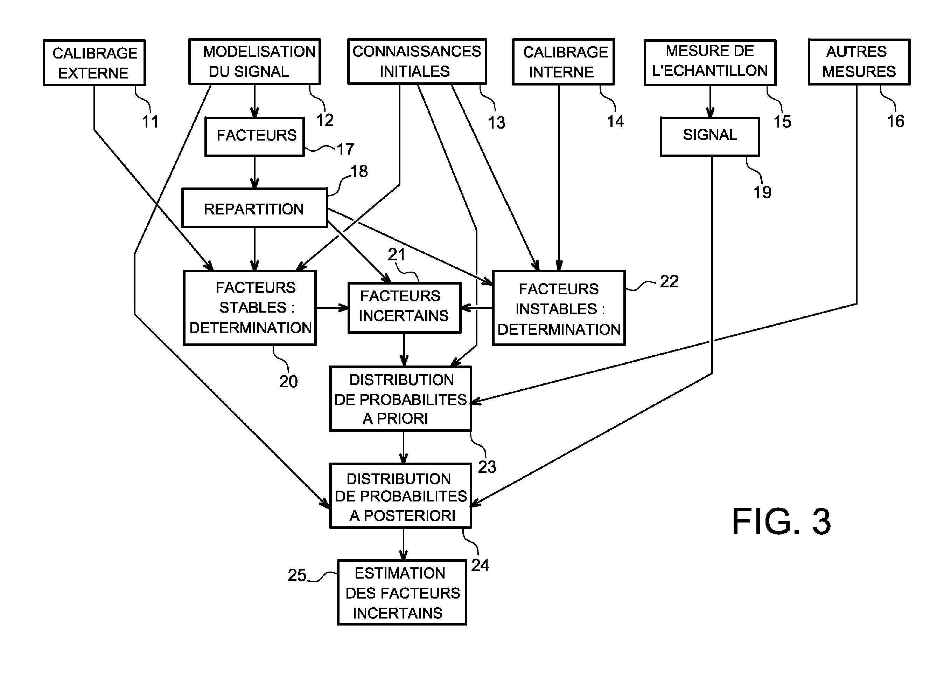

La figure 1 est un schéma de l'appareillage de mesure, la figure 2 une illustration d'un signal, et la figure 3 un organigramme.

L'ensemble de la chaîne de mesure est représenté de façon schématique à la figure 1. Un échantillon de sang ou de plasma est fourni à un module de préparation 1, qui est utilisé pour séparer les molécules qui seront l'objet de la mesure du reste de l'échantillon. Des procédés de nature biologique ou physique, comme des captures de certaines protéines par affinité avec des anticorps, peuvent être employés. Le mélange de protéines sélectionné passe ensuite dans l'appareillage de mesure, qui comprend d'abord un module de digestion 2 décomposant les protéines en peptides ou en acides aminés et réduisant leur masse, un chromatographe 3 en phase liquide qui sépare les protéines les unes des autres, donne une première mesure et permet éventuellement une autre sélection de protéines, et un spectromètre de masse 4 qui fournit une seconde mesure. Le module de digestion 2 est optionnel, et un seul des moyens de mesure 3 et 4 peut être employé. Les mesures consistent en un spectrogramme des protéines (figure 2) que reçoit un module de traitement 5 de l'information, dont le fonctionnement sera décrit maintenant et qui fournit des résultats interprétés par l'utilisateur.

Un premier élément de l'invention est la construction d'un modèle analytique de la chaîne de mesure. Dans le cas de la figure 1, où le mélange de protéines est analysé suivant deux dimensions correspondant à deux paramètres physico-chimiques, le modèle intégrant des paramètres associés au chromatographe 3 et au spectromètre de masse 4.

Une colonne de chromatographie est un système retardant différemment chacune des molécules qui la parcourt.

L'entrée et la sortie de ce système sont des fonctions représentant une quantité de molécules en fonction du temps. La propagation des protéines dans la colonne peut être décrite par une équation différentielle qu'on peut aussi approcher par un modèle convolutif avec une réponse impulsionnelle gaussienne dont la moyenne $T_i$ est appelée temps de rétention de la protéine i. Le signal de sortie d'une protéine $C_i(t)$ peut donc être décrit par l'équation (1)

$$c_i(t) = \left(2\pi\gamma_c^{-1}\right)^{-1/2} \exp\left(-0.5\gamma_c(t-T_i)^2\right)$$

où $\gamma_c$ est l'inverse de la variance de la gaussienne. Les temps de rétention $T_i$ sont tenus pour instables d'une mesure à une autre ; il est donc difficile d'identifier directement les natures des protéines associées à chacun des pics, mais on peut recourir à des molécules marqueuses, de concentration connue et de composition proche des protéines recherchées, qu'on injecte avec l'échantillon dans la colonne chromatographique pour détecter leurs pics, qui sont adjacents à ceux desdits protéines proches, qu'on identifie ainsi.

A chaque instant, la sortie de la colonne de chromatographie est analysée par le spectromètre de masse 4. Il est sensible au rapport entre la masse d'une molécule et sa charge, et fournit en sortie une fonction donnant la quantité des molécules dans l'échantillon d'après leur rapport masse sur charge. Chaque protéine sera en général formée de plusieurs impulsions en raison des isotopes qui peuvent donner des masses différentes à une même molécule. De plus, le phénomène d'ionisation peut leur donner un nombre de charges différent. Classiquement, une protéine peut avoir jusqu'à trois neutrons et trois charges supplémentaires.

Le signal de sortie du spectromètre de masse 4 peut être modélisé par l'équation (2)

$$s_i(m) = \sum_{j=1}^{3}\sum_{k=0}^{3} \Pi_{ijk} \exp\left(-0{,}5\gamma_s\left(m - \frac{M_i + kM_n}{j}\right)^2\right)$$

Avec $\Pi_{ijk} = \dfrac{\gamma_s^{1/2}\pi_{ij}\pi'_{ik}}{(2\pi)^{1/2}}, \sum_j \pi_{ij} = 1\ et\ \sum_k \pi'_{ik} = 1$, où les paramètres sont :

- j, nombre de charges portées par la protéine,
- k, nombre de neutrons supplémentaires,
- $\Pi_{ij}$, proportions de la protéine i ayant j charges,
- $\Pi_{ik}$, proportions de la protéine i ayant k neutrons supplémentaires,
- $\gamma_s$, inverse de la variance des pics spectrométriques,
- $M_i$, masse de la protéine i sans neutrons supplémentaires,
- $M_n$, masse d'un neutron.

Le modèle global du signal arrivant au module de traitement de l'information 5 peut donc être représenté par l'équation (3) quand le module de digestion 2 est présent :

$$Y = \sum_{p,i,j}\left(x_p D_{ip} \Xi_i \pi_{ij} s_{ij} c_i^t + x_p^* D_{ip} \Xi_i \pi_{ij} s_{ij}^* c_i^t\right) + B \ ,$$

où les symboles représentant le signal mesuré sont :

- p : numéro de la protéine étudiée,
- i : numéro du peptide étudié,
- j : nombre de charge porté par le peptide étudié,
- Y : données : spectrogramme,
- B: bruit,
- $x_p$ : concentration de la protéine p dans l'échantillon analysé,
- $x_p^*$ : concentration de la version alourdie de la protéine p, c'est-à-dire isotopique de la protéine p, de l'échantillon réel, mais ajoutée au titre d'une calibration interne dans l'échantillon analysé,

- $D_{ip}$ : gain de la digestion et des étapes de préparation de la protéine en peptides (idéalement un entier naturel),
- $\Xi_i$ : gain du système pour le peptide i,
- $\pi_{ij}$ : proportion de peptide i ayant la charge j,

- $s_{ij}$ : spectre de masse du peptide i chargé j fois, forme échantillonnée du signal $s_{ij}$ (m)

$$\text{où } s_{ij}(m) = \sum_{k=0}^{3} \Pi_{ik} \exp(-0,5\gamma_1(m - \frac{M_i + kM_n}{j})^2) \text{ et } \Pi_{ik} = \frac{\gamma^{1/2}\Pi'_{ik}}{(2\pi)^{1/2}} \text{ , à comparer à l'équation (2),}$$

- $s_{ij}^*$ : spectre de masse du peptide alourdi i chargé j fois,
- $c_i^t$ : transposé du chromatogramme du peptide i, forme échantillonnée du signal $c_i(t)$, exprimé sous la forme de vecteur.

Le modèle est linéaire en fonction des concentrations en protéines ou peptides, et la partie redevable au spectromètre de masse 4 est indépendante de celle qui est redevable au chromatographe 3. L'utilisation d'un seul de ces appareils serait donc immédiatement exploitable en simplifiant le modèle. De même, l'influence du module de digestion 2 apparaît par le coefficient $D_{ip}$, qui disparaîtrait de la formule pour un système dépourvu de ce module ; seules des protéines seraient considérées au lieu de peptides, sans changement dans l'invention.

Le modèle de l'équation (3) peut être représenté de façon simplifié par $Y = \sum_{i=1}^{N} x_i s_i c_i^t + B \quad (4)$ , où Y et B sont des matrices. Ce système étant linéaire, il peut être récrit selon l'équation y = Hx+b (5), où y et b sont des vecteurs-colonnes, x= $[x_1 \ldots x_N]^t$ représente les variables à calculer que sont les concentrations des protéines, et H est une matrice formée par la juxtaposition de vecteurs-colonnes $y_i$ qui correspondent à des signaux que donnerait la protéine i respective à une concentration unitaire. H est paramétré par tous les facteurs intervenant dans la mesure, dont certains au moins peuvent être tenus pour incertains et sont donc susceptibles d'être recalculés.

On procède à une analyse bayésienne des facteurs tenus pour incertains en estimant ces facteurs sous forme de distributions de probabilités, appelées distributions de probabilités a posteriori, dont un paramètre donne l'estimation définitive des facteurs et des concentrations des protéines et finalement le profil moléculaire de l'échantillon.

Des valeurs a priori, avant cette estimation, des facteurs pourront être obtenues par la mesure ou par des hypothèses considérées comme plausibles, telles que des distributions de probabilité a priori.

PREMIER EXEMPLE

Dans le premier exemple, qui ne fait toutefois pas partie de l'invention, on procède à une estimation presque directe des concentrations en supposant que la plupart des facteurs entrant dans la fonction de modélisation du signal de mesure sont connus sans incertitude, sauf le bruit qui est modélisé par une distribution gaussienne de probabilité à priori dont la moyenne est supposée être nulle (ce qui signifie que la chaîne de mesure ne commet pas d'erreur systématique) et dont la variance est $\sigma_b^2$, choisie par l'utilisateur d'après son expérience ou évaluée par une mesure d'analyse spectrale par exemple, sur l'appareillage à vide si besoin est. Une bonne évaluation donnera évidemment des résultats plus fiables mais même une évaluation approchée est susceptible d'améliorer l'évaluation par rapport à une mesure directe. Enfin, le bruit est considéré comme blanc.

Si on appelle θ l'ensemble des variables intervenant dans le modèle, la distribution de probabilités à priori du signal y (en fonction de x et θ) de (5) peut être décrite par (6)

$$p(y|x,\theta) = \frac{1}{(\sigma_b \sqrt{2\pi})^M} \exp\left(-\frac{1}{2}\frac{\|y - Hx\|^2}{\sigma_b^2}\right),$$

qui donne la valeur de la probabilité pour toute valeur de y en fonction de H et de x.

La distribution de probabilités a priori pour les concentrations de protéines peut être représentée par une fonction de densité gaussienne de l'équation (7) $p(x) = \dfrac{1}{\left(\sigma_x \sqrt{2\pi}\right)^N} \exp\left(-\dfrac{1}{2}\dfrac{\|x-x_0\|^2}{\sigma_x^2}\right)$, où $x_0$ est la valeur la plus probable mesurée d'après la hauteur des pics ou une autre source d'information comme une expérience précédente, ou sur une série de telles expériences portant sur des échantillons différents provenant de différentes personnes, ou de différentes personnes malades, etc. ; et la variance $\sigma_x^2$ est choisie par l'utilisateur pour exprimer la fiabilité qu'il attribue à la première mesure. Il peut se fonder sur des valeurs mesurées auparavant pour des échantillons différents, et qui ont donc donné des répartitions statistiques connues, sur lesquelles la distribution de probabilités a priori doit s'ajuster. La moyenne égale à $x_0$ de la fonction exprime que les valeurs réelles doivent être proches des valeurs mesurées et qu'il n'y a pas de corrélation entre les différentes concentrations de protéines.

La distribution de probabilités a posteriori pour la variable x peut alors être déterminée par l'équation (8) d'après (6) et (7):

$$p(x|y,\theta) \propto \exp\left(-\dfrac{1}{2}\dfrac{\|y-Hx\|^2}{\sigma_b^2} - \dfrac{1}{2}\dfrac{\|x-x_0\|^2}{\sigma_x^2}\right),$$

où le signe infini est ici symbole de proportionnalité.

La dernière étape du procédé consiste à donner une estimation de x d'après cette distribution de probabilités a posteriori. Différents critères peuvent être choisis ; on choisit ici une estimation par la moyenne $\hat{x}$ de cette distribution, qui est donnée par l'équation (9)

$\hat{x} = \left(H^t H + \dfrac{\sigma_b^2}{\sigma_x^2} I\right)^{-1}\left(H^t y + \dfrac{\sigma_b^2}{\sigma_x^2} x_0\right)$, où I est la matrice identité, les paramètres de l'équation (9) étant tous connus soit par la mesure soit par une détermination de l'utilisateur. D'autres paramètres, tels que la médiane ou le maximum, peuvent être préconisés aussi dans certains cas, selon la fonction de distribution de probabilités a posteriori obtenue.

DEUXIEME EXEMPLE

Un exemple plus général va maintenant être décrit. Comme certaines causes de fluctuation dans les mesures ne peuvent être parfaitement maîtrisées, ni tous les paramètres de modélisation calibrés efficacement, il peut être nécessaire d'en ajuster. Dans l'exemple que voici, ces paramètres seront l'écart-type $\sigma_b$ de la distribution d'une probabilité à priori du bruit b (déjà rencontré à l'exemple précédent) et la largeur du pic chromatographique, ici notée aussi sous forme d'un écart-type $\sigma_c$. On appellera θ' tous les autres paramètres du vecteur θ, et on notera encore

$\gamma_b = \sigma_b^{-2}$ et $\gamma_c = \sigma_c^{-2}$.

Des distributions de probabilités a priori doivent être déterminées pour ces paramètres $\gamma_b$ et $\gamma_c$. On peut choisir la fonction de Jeffreys $p(\gamma_b) = \gamma_b^{-1}$ pour le premier et une distribution uniforme entre deux valeurs conventionnelles (choisies par l'utilisateur) $\gamma_{cmin}$ et $\gamma_{cmax}$ pour le second.

La distribution de probabilités a posteriori pour les variables $[x\gamma_b\gamma_c]$ en fonction de $\gamma$ et θ' est donnée par l'équation (10)

$p(x,\gamma_b,\gamma_c|\gamma,\theta') \propto p(x)p(\gamma_b)p(\gamma_c)p(y|x,\gamma_b,\gamma_c,\theta')$ d'après la règle de Bayes. Cette distribution n'est plus gaussienne, et sa moyenne sera estimée par une méthode d'échantillonnage stochastique faisant appel à un générateur de vecteurs aléatoires reproduisant cette distribution. L'estimation de la moyenne consistera à obtenir, pour chacune des variables $x$, $\gamma_b$ et $\gamma_c$, la moyenne des valeurs produites par ce générateur. On peut utiliser une structure de Gibbs qui permet de transformer l'échantillonnage d'une loi multivariée en un échantillonnage de lois monovariées ou gaussiennes. L'algorithme du générateur consistera donc à initialiser $[x\gamma_b\gamma_c]$ à des valeurs $x^{(0)}$, $\gamma_b^{(0)}$, $\gamma_c^{(0)}$ et, pour k variant de 1 à K, à engendrer successivement

$$x^{(k+1)} \sim p\left(x \middle| y, \gamma^{(k)} \gamma_c^{(k)}\right),$$

$$\gamma_b^{(k+1)} \sim p\left(\gamma_b \middle| y, x^{(k+1)}, \gamma_c^{(k)}\right),$$

$$\gamma_c^{(k+1)} \sim p\left(\gamma_c \middle| y, x^{(k+1)}, \gamma_b^{(k+1)}\right),$$

où le signe ~ signifie que l'élément de gauche est tiré aléatoirement selon la distribution de probabilités de l'élément de droite, par exemple en utilisant l'algorithme de Métropolis-Hastings, ou l'algorithme de génération de nombres aléatoires.

Ces trois distributions de probabilités pourront correspondre respectivement à une gaussienne multivariée

$$p\left(x \middle| y, \gamma_b, \gamma_c\right) = (2\pi)^{-\frac{N}{2}} |R|^{-\frac{1}{2}} \exp\left(-\frac{1}{2}(x - \mu^t)R^{-1}(x - \mu)\right) \quad \text{avec}$$

$$\mu = \left(H_{\gamma_C}^t H_{\gamma_C}\right)^{-1} H_{\gamma_C}^t y, \ R + \gamma_b^{-1}\left(H_{\gamma_C}^t H_{\gamma_C}\right)^{-1}, \quad \text{une distribution gamma} \ \left(\gamma_b \middle| y, x, \gamma_c\right) = \frac{\gamma_b^{\alpha-1}}{\beta^\alpha \Gamma(\alpha)} \exp\left(-\frac{\gamma_b}{\beta}\right)$$

avec

$$\alpha = M / 2, \beta = \left\| y - H_{\gamma_C} x \right\|^2 / 2,$$

*et* $\Gamma$ est la fonction gamma,
et une distribution de probabilités

$$p\left(\gamma_c \middle| y, x, \gamma_b\right) \propto \exp\left(-\frac{1}{2}\gamma_b \left\| y - H_{\gamma_C} \right\|^2\right) \upsilon\left[\gamma_{c\,\min}; \ \gamma_{c\,\max}\right](\gamma_c),$$

avec $\upsilon$ qui est la fonction indicatrice de l'intervalle normalisé [$\gamma_{cmin}$, $\gamma_{cmax}$], appelée aussi distribution constante sur l'intervalle.

Cette distribution peut être échantillonnée par une algorithme de Metropolis-Hastings connu des statisticiens.

TROISIEME EXEMPLE

On exposera ci-dessous un troisième exemple qui illustre une situation où plusieurs facteurs de la mesure (gain du système, temps de rétention, en plus du bruit) sont tenus pour incertains, en étant instables d'une mesure à une autre, et doivent être estimés par une méthode probabiliste. Ces facteurs sont regroupés en un vecteur de facteurs instables $\theta_{\text{instable}}$ qu'on engendre par itérations par un échantillonneur de Gibbs, avec des distributions de probabilités a posteriori et conditionnelles. Voici comment les différents facteurs peuvent être engendrés :

1°) Le vecteur $x^{(k)}$ exprimant la hauteur des pics et qui intervient aussi dans le procédé, peut être obtenu avec un générateur de loi multinormale de moyenne $(H^tH)^{-1}(H^ty - H^tH^*x^*)$ et de matrice de covariance $\sigma_b^2\left(H^t H\right)^{-1}$.

2°) Le vecteur $\xi^{(k)}$ résultat de la concaténation en vecteur-colonne du contenu de la matière $\Xi_i$ de l'équation (3) (gain du système) est obtenu avec un générateur de loi multinormale de moyenne $(G^tG)^{-1}(G^ty)$ et de matrice de

covariance $\sigma_b^2\left(G^t G\right)^{-1}$ provenant d'une autre écriture de l'équation (3) : y = Gξ+b.

3˚) Les temps de rétention T$_i$ dans la colonne de chromatographie font aussi partie des paramètres instables, et chacun des T$_i$ est engendré par un algorithme de Metropolis-Hastings indépendant :

Générer $T'\sim\nu_L\,T_{i\min};T_{i\max}\rrbracket$ et $u\sim\nu_{[0;1]}$

Calculer $\delta_i = \left(-\frac{1}{2}\sigma_b^{-2}\{\Delta_{1i}-\Delta_{2i}\}\right)$ avec

$$\Delta_{1i} = \Psi\left(x^{(k)},\xi^{(k)},\left[T_1^{(k)}\ ...\ T_{i-1}^{(k)}\ T_i'\ T_{i+1}^{(k-1)}\ ...\ T_1^{(k-1)}\right]\right)$$

$$\Delta_{2i} = \Psi\left(x^{(k)},\xi^{(k)},\left[T_1^{(k)}\ ...\ T_{i-1}^{(k)}\ T_i^{(k-1)}\ T_{i+1}^{(k-1)}\ ...\ T_1^{(k-1)}\right]\right)$$

Si δ>log(u)
alors $T_i^{(k)} \leftarrow T'$
sinon $T_i^{(k)} \leftarrow T_i^{(k-1)}$

On rappelle que le Ψ est le vecteur des variables Ψ$_i$, égal à

$$\Psi(x,\xi,T) = \left\| Y - \sum_{p,i,j}\left(x_p D_{ip}\Xi_i\pi_{ij}s_{ij}c_i^t(T_i) + x_p^* D_{ip}\Xi_i\pi_{ij}s_{ij}^*c_i^t(T_i)\right)\right\|^2.$$

4˚) enfin, $\sigma_b^{-2(k)}$ est obtenu par un générateur de loi gamma de densité $p\left(\sigma_b^{-2}\right) = \frac{\sigma^{-2(\alpha-1)}}{\beta^\alpha\Gamma(\alpha)}\exp\left(-\frac{\sigma_b^{-2}}{\beta}\right)$

avec

$$\alpha = NM/2\ \ ;\ \ 1/\beta = \Psi(x,\xi,t)/2.$$

La résolution consiste à obtenir des valeurs de ce générateur aléatoire et de leur appliquer le critère d'estimation décidé auparavant, tel que la moyenne. Lorsque ce critère convergera, on obtiendra le résultat recherché.

Le distributeur de probabilité a posteriori est :

$$p\left(x,\xi,t,\gamma_b'',\theta''|y\right) = p\left(y|x,\xi,t,\gamma_b,\theta''\right)p(x)p(\gamma_b)p(\xi)\prod_i p(T_i)$$

Avec $p(y|x,\xi,t,\gamma_b,\theta'')=p(y|x,\theta)$
et p(x) comme dans le premier exemple,
p(γ$_b$) identique à celle du deuxième exemple,

$$p(\xi) = \frac{1}{\left(\sigma_\xi\sqrt{2\Pi}\right)^N}\exp\left(-\frac{1}{2}\frac{\|\xi-\xi_0\|^2}{\sigma_\xi^2}\right);$$

ξ est la valeur connue d'expériences précédentes, ou la valeur du gain calculé à partir de la hauteur estimée du pic et la valeur connue de x sur cette expérience ou des expériences similaires, ou une valeur arbitraire, par exemple 0, si la valeur de l'écart-type tend vers l'infini ou à une valeur très importante par rapport à l'écart-type du bruit ; $\sigma_\xi$ un intervalle de recherche pour les $\xi_i$. Il doit englober toutes les valeurs connues de $\xi_i$ ; $p(T_i)$ est la distribution uniforme choisie entre deux valeurs $T_{i\,min}$ $T_{i\,max}$ choisies de façon à englober toutes les valeurs connues de $T_i$. Elles peuvent à l'extrême être choisies de façon à englober tout le signal.

QUATRIEME EXEMPLE

Voici encore un quatrième exemple. Ici, on cherche à obtenir certains facteurs du modèle analytique qui sont supposés être stables, c'est-à-dire constants d'une mesure à une autre. Il peut s'agir des proportions $\Pi_i$ de molécules de chaque espèce chimique d'après le nombre de charges ; ces proportions sont supposées dépendre du solvant utilisé dans la mesure pour mouvoir l'échantillon dans la colonne de chromatographie.

On procède alors par une mesure de calibration distincte de la mesure principale, en injectant une quantité connue de l'espèce chimique considérée dans l'appareillage, en reproduisant les autres conditions de la mesure principale, de sorte que x est connu. L'algorithme du quatrième exemple permet d'obtenir $\Pi_i$.

Certains facteurs comme le gain du système de digestion $D_{ip}$, et les écarts-types exprimant la largeur des pics dans le chromatographe 3 et le spectromètre de masse 4, $\sigma_{ci}$ et $\sigma_{si}$, sont supposés connus. Le procédé pourrait encore s'appliquer sinon. On peut procéder de la façon suivante.

1°) Le vecteur $\xi^{(k)}$ est obtenu avec un générateur de loi multinormale identique à celui de l'exemple précédent.

2°) $t^{(k)}$ peut être encore obtenu par un algorithme de Metropolis-Hastings indépendant semblable à celui de l'exemple précédent.

3°) Chaque élément de $\Pi_i^{(k)}$ peut être engendré par un algorithme de Metropolis-Hastings indépendant.

4°) $\sigma_b^{-2(k)}$ est obtenu par un générateur de loi gamma de densité $p\left(\sigma_b^{-2}\right) = \dfrac{\sigma_b^{-2(\alpha-1)}}{\beta^\alpha \Gamma(\alpha)} \exp\left(-\dfrac{\sigma_b^{-2}}{\beta}\right)$, où

$\alpha = NM/2 ; 1/\beta = \varphi(t, \xi, \pi)/2$, selon un algorithme connu des statisticiens.

Voici l'algorithme de la réalisation de la partie 3°.

Générer $\Pi' \sim D\left(\overline{\pi}_i ; \sigma_{\pi_i}^2\right)$ et u $\sim \nu_{[0;1]}$, D distribution de Dirichlet de moyenne $\Pi$, et de variance $\sigma_{\pi_i}^2$ ;

Selon l'algorithme

Calculer $\delta_i = \left(-\dfrac{1}{2}\sigma_b^{-2}\{\Delta_{1i} - \Delta_{2i}\}\right)$ avec

$$\Delta_{1i} = \left(t^k, \xi^{(k)}, \left[\Pi_1^{(k)} \ldots \Pi_{i-1}^{(k)} \; \Pi_i' \; \Pi_{i+1}^{(k-1)} \ldots \Pi_1^{(k-1)}\right]\right)$$

$$\Delta_{2i} = \left(t^k, \xi^{(k)}, \left[\Pi_1^{(k)} \ldots \Pi_{i-1}^{(k)} \; \Pi_i^{(k-1)} \; \Pi_{i+1}^{(k-1)} \ldots \Pi_1^{(k-1)}\right]\right) ;$$

Si $\delta_i > \log(u)$,

alors $\Pi_i^{(k)} \leftarrow \Pi_i'$ ;

sinon $\Pi_i^{(k)} \leftarrow \Pi_i^{(k-1)}$

avec $(x, T, \xi, \Pi) = \left\| Y - \displaystyle\sum_{p,i,j} \left(x_p D_{ip} \Xi_i \Pi_{ij} s_{ij} c_i^t(T_i) + x_p^* D_{ip} \Xi_i \Pi_{ij} s_{ij}^* c_i^t(T_i)\right) \right\|^2$

où x est la concaténation des valeurs $x_i$, et la matrice $\Pi$ est la concaténation des vecteurs $\Pi_i$ estimés par l'algorithme et eux-mêmes formés par les éléments $\pi_{ij}$.

On procède en faisant converger les distributions de probabilité de ces facteurs x, $\xi$, t, $\Pi_i$ et b par boucles successives d'itérations, comme dans le troisième exemple. Quand la distribution de probabilités de $\Pi_i$ a convergé, elle peut être utilisée dans la mesure principale et les conditions des exemples précédents, par exemple dans la fonction $\Psi_i$ du troisième exemple.

Une telle calibration pourrait être appliquée à la détermination d'autres facteurs tenus pour stable, comme $\sigma_{si}$ et $\sigma_{ci}$ dans certaines conditions.

Le procédé peut être complété par certains raffinements. On peut ainsi utiliser le marquage isotopique en associant les molécules de synthèse de concentration connue, portant un certain nombre d'isotopes, à chaque molécule d'intérêt. La molécule d'intérêt et la molécule d'étalonnage ayant quasiment les mêmes propriétés physiques ou chimiques, certains paramètres peuvent être retrouvés. Il peut s'agir du gain $\Xi_i$ de l'appareil de mesure ou d'autres paramètres comme le temps de rétention $T_i$ des molécules d'intérêt. Un étalonnage externe peut être réalisé en mesurant des molécules en concentration connue dans un environnement simplifié pour connaître certains paramètres du modèle.

Les distributions de probabilités a priori par lesquelles on donne un départ au calcul de certains facteurs peuvent comprendre les fonctions statistiques connues représentées par leurs paramètres, comme une valeur centrale et un écart-type, ou un intervalle de variation entre deux valeurs extrêmes. L'invention peut être étendue aux chromatographies multidimensionnelles ; les données de la matrice H seront alors un tenseur au lieu d'une matrice. Enfin, l'invention peut être étendue à d'autres molécules que les protéines.

La figure 3 résume le procédé. Les outils utilisés, correspondant à un premier niveau du procédé, comprennent le calibrage externe 11, la modélisation du signal 12, les connaissances initiales 13, le calibrage interne 4, la mesure de l'échantillon 15 et éventuellement d'autres mesures 16. De la modélisation du signal 12 on tire les facteurs 17 entrant dans cette modélisation, et de la mesure de l'échantillon 15 on tire le signal 19. Les facteurs 17 font l'objet d'une répartition 18 en facteurs stables 20, facteurs incertains 21 et facteurs instables 22. Les facteurs stables 20 peuvent être déterminés à l'aide du calibrage externe 11 et des connaissances initiales 13. Les facteurs instables 22 peuvent être déterminés encore par les connaissances initiales 13 et le calibrage externe 14. Certains des facteurs stables ainsi qu'instables sont toutefois des facteurs incertains, qui sont modélisés avec une distribution de probabilités a priori 23 établie encore par les connaissances initiales 13 et éventuellement par les autres mesures 16. L'application des étapes de calcul détaillées dans le corps de ce texte donne des distributions de probabilités a posteriori 24 des facteurs incertains grâce à la modélisation du signal 12 et au signal 19. L'estimation des facteurs incertains 25 est devenue possible.

**Revendications**

1. Procédé d'estimation de concentrations de molécules dans un échantillon, consistant à faire passer l'échantillon par un appareillage (2, 3, 4) et à obtenir ainsi un signal consistant en au moins un spectre (y) composé de pics, représentatif des concentrations des molécules en fonction d'au moins une variable (t, m) et à estimer les concentrations (x) des molécules ; **caractérisé en ce qu'**il consiste à faire une modélisation analytique du signal par une fonction de modélisation comprenant des facteurs, dont les concentrations (x) et d'autres facteurs comprenant des facteurs de gain (D, $\Xi$) de l'appareillage, des facteurs de description des pics ($C_{ij}$) ; puis à attribuer aux concentrations et à certains des autres facteurs, qui sont des facteurs incertains, des distributions de probabilités a priori ; à déduire du signal des distributions de probabilités a posteriori pour les concentrations, en utilisant la fonction de modélisation, des estimations des autres facteurs et les distributions de probabilités a priori, et à estimer les concentrations (x) d'après un paramètre déduit des distributions de probabilités a postériori.

2. Procédé d'estimation de concentration de molécules dans un échantillon selon la revendication 1, **caractérisé en ce que** le paramètre des distributions de probabilités a priori des concentrations est une moyenne desdites distributions de probabilités postérieures.

3. Procédé d'estimation de concentration de molécules dans un échantillon selon la revendication 1, **caractérisé en ce que** le paramètre des distributions de probabilités a priori des concentrations est une médiane desdites distributions de probabilités postérieures.

4. Procédé d'estimation de concentration de molécules dans un échantillon selon la revendication 1, **caractérisé en ce que** le paramètre des distributions de probabilités a priori des concentrations est un maximum desdites distributions de probabilités postérieures.

**5.** Procédé d'estimation de concentration de molécules dans un échantillon selon l'une quelconque des revendications 1 à 4, **caractérisé en ce que** les distributions de probabilités a priori comprennent des fonctions gaussiennes.

**6.** Procédé d'estimation de concentration de molécules dans un échantillon selon l'une quelconque des revendications 1 à 5, **caractérisé en ce que** lesdits autres facteurs comprennent des facteurs ($\pi$) de répartition des molécules en fonction de variation de masse atomique ou de charge électrique.

**7.** Procédé d'estimation de concentrations de molécules dans un échantillon selon l'une quelconque des revendications précédentes, **caractérisé en ce que** les facteurs incertains comprennent des temps de rétention ($T_i$) des molécules dans une colonne chromatographique.

**8.** Procédé d'estimation de concentration de molécules dans un échantillon selon l'une quelconque des revendications 1 à 7, **caractérisé en ce que** les facteurs incertains comprennent des largeurs de pics de mesure ($\sigma_c$) des molécules.

**9.** Procédé d'estimation de concentration de molécules dans un échantillon selon l'une quelconque des revendications 1 à 8, **caractérisé en ce qu'**il comprend une calibration interne consistant en une injection de molécules marqueuses dans l'échantillon, les molécules marqueuses ayant respectivement des propriétés voisines de certaines des molécules de l'échantillon vis-à-vis de l'appareillage et donnant des pics de mesure proches de pics de mesure desdites certaines molécules de l'échantillon.

**10.** Procédé d'estimation de concentrations de molécules dans un échantillon selon l'une quelconque des revendications 1 à 9, **caractérisé en ce qu'**il comprend une calibration externe consistant en une injection de calibration de molécules semblables à certaines des molécules de l'échantillon, mais à des concentrations connues, dans l'appareillage, et à déduire du signal de l'injection de calibration et du modèle analytique certains des autres facteurs.

**11.** Procédé d'estimation de concentrations de molécules selon l'une quelconque des revendications précédentes, **caractérisé en ce que** les molécules sont des protéines.

**12.** Dispositif d'estimation de concentrations de molécules dans un échantillon, comprenant un appareil (3, 4) alimenté par l'échantillon et délivrant un spectre d'ensemble de profils moléculaires représentatif de ces concentrations en fonction d'une variable, **caractérisé en ce qu'**il comprend un module de traitement (5) conçu pour appliquer le procédé selon l'une quelconque des revendications précédentes.

**13.** Dispositif d'estimation de concentrations de molécules dans un échantillon selon la revendication 12, **caractérisé en ce que** l'appareil comprend une colonne chromatographique (3).

**14.** Dispositif d'estimation de concentrations de molécules dans un échantillon selon la revendication 12 ou 13, **caractérisé en ce que** l'appareil comprend un spectromètre de masse (4).

**15.** Dispositif d'estimation de concentrations de molécules dans un échantillon selon la revendication 12, 13 ou 14, **caractérisé en ce que** l'appareil comprend, en amont, un dispositif de décomposition de protéines (2).

# FIG. 1

# FIG. 2

FIG. 3

CALIBRAGE EXTERNE 11

MODELISATION DU SIGNAL 12

CONNAISSANCES INITIALES 13

CALIBRAGE INTERNE 14

MESURE DE L'ECHANTILLON 15

AUTRES MESURES 16

FACTEURS 17

SIGNAL 19

REPARTITION 18

FACTEURS STABLES : DETERMINATION 20

FACTEURS INCERTAINS 21

FACTEURS INSTABLES : DETERMINATION 22

DISTRIBUTION DE PROBABILITES A PRIORI 23

DISTRIBUTION DE PROBABILITES A POSTERIORI 24

ESTIMATION DES FACTEURS INCERTAINS 25

EP 2 028 486 A1

**Office européen**
**des brevets**

**RAPPORT DE RECHERCHE EUROPEENNE**

Numéro de la demande

EP 08 16 2524

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KANG H D; PREUSS R; SCHWARZ-SELINGER T; DOSE V: "Decomposition of multicomponent mass spectra using Bayesian probability theory" JOURNAL OF MASS SPECTROMETRY, vol. 37, juillet 2002 (2002-07), pages 748-754, XP002476266 WILEY publié en ligne le 12 juin 2002 * abrégé * * page 748, colonne 1, alinéa 1 - colonne 2, alinéa 4 * * page 748, colonne 2, alinéa 4 - page 750, colonne 2, dernier alinéa * ----- | 1,2,12, 14 | INV. G01N30/86 G06F17/18 |
| X | SCHWARZ-SELLINGER T; PREUSS R; DOSE V; VON DER LINDEN W: "Analysis of multicomponent mass spectra applying Bayesian probability theory" JOURNAL OF MASS SPECTROMETRY, vol. 36, août 2001 (2001-08), pages 866-874, XP002476267 WILEY publié en ligne le 7 août 2001 * le document en entier * ----- | 1,2,12, 14 | |
| X | MOUSSAOUI SAID; BRIE DAVID; MOHAMMAD-DJAFARI ALI; CARTERET CEDRIC: "Separation of Non-Negative Mixture of Non-Negative Sources Using a Bayesian Approach and MCMC Sampling" IEEE TRANSACTIONS ON SIGNAL PROCESSING, vol. 54, no. 11, novembre 2006 (2006-11), pages 4133-4145, XP002476268 * abrégé * * page 4133, colonne 1, alinéa 1 * * page 4133, colonne 1, ligne 1 - page 4135, colonne 2, dernier alinéa * ----- -/-- | 1,4,12, 13 | |

| | | DOMAINES TECHNIQUES RECHERCHES (IPC) |
|---|---|---|
| | | G01N G06F |

Le présent rapport a été établi pour toutes les revendications

| Lieu de la recherche | Date d'achèvement de la recherche | Examinateur |
|---|---|---|
| Munich | 24 septembre 2008 | Bravin, Michel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**EP 2 028 486 A1**

Office européen
des brevets

**RAPPORT DE RECHERCHE EUROPEENNE**

Numéro de la demande

EP 08 16 2524

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MOHAMMAD-DJAFARI A ET AL: "Regularization, maximum entropy and probabilistic methods in mass spectrometry data processing problems" INTERNATIONAL JOURNAL OF MASS SPECTROMETRY, ELSEVIER SCIENCE PUBLISHERS, AMSTERDAM, NL, vol. 215, no. 1-3, 1 avril 2002 (2002-04-01), pages 175-193, XP004346683 ISSN: 1387-3806 | 1-5,8, 12,14 | |
| Y | * abrégé * <br><br>* page 175, colonne 1, ligne 1 - page 179, colonne 1, ligne 34 * <br>* page 183, colonne 1, dernier alinéa - page 186, colonne 2, dernier alinéa * <br>* page 191, colonne 1, dernier alinéa - page 192, colonne 2, dernière ligne * <br>----- | 7,9-11, 15 | |
| Y | EP 1 598 666 A (HOFFMANN LA ROCHE [CH]; ROCHE DIAGNIOSTICS GMBH [DE]) 23 novembre 2005 (2005-11-23) * alinéa [0154] * * alinéa [0182] - alinéa [0188] * ----- | 7,9,10 | DOMAINES TECHNIQUES RECHERCHES (IPC) |
| Y | HILARIO MELANIE; KALOUSIS ALEXANDROS; PELLEGRINI CHRISTIAN; MUELLER MARKUS: "Processing and classifification of protein mass spectra" MASS SPECTROMETRY REVIEWS, vol. 25, 2006, pages 409-449, XP002476269 WILEY * page 410, colonne 1, alinéa 2 - colonne 2, dernière ligne * * page 420, colonne 2, ligne 16 - page 421, colonne 1, ligne 5 * ----- <br><br>-/-- | 11,15 | |

Le présent rapport a été établi pour toutes les revendications

| Lieu de la recherche | Date d'achèvement de la recherche | Examinateur |
|---|---|---|
| Munich | 24 septembre 2008 | Bravin, Michel |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.............................................................
& : membre de la même famille, document correspondant

EPO FORM 1503 03.82 (P04C02)

**EP 2 028 486 A1**

**Office européen
des brevets**

**RAPPORT DE RECHERCHE EUROPEENNE**

Numéro de la demande

EP 08 16 2524

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | TOUSSAINT U V ET AL: "Maximum entropy decomposition of quadrupole mass spectra" JOURNAL OF VACUUM SCIENCE AND TECHNOLOGY: PART A, AVS /AIP, MELVILLE, NY, US, vol. 22, no. 2, 1 mars 2004 (2004-03-01), pages 401-406, XP012073568 ISSN: 0734-2101 * abrégé * * page 402, colonne 1, ligne 22 - colonne 2, ligne 21 * * page 404, colonne 1 - colonne 2; exemple 1 * ----- | 1 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 24 septembre 2008 | Bravin, Michel |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................................
& : membre de la même famille, document correspondant

EPO FORM 1503 03.82 (P04C02)

16

**ANNEXE AU RAPPORT DE RECHERCHE EUROPEENNE
RELATIF A LA DEMANDE DE BREVET EUROPEEN NO.**

EP 08 16 2524

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-09-2008

| Document brevet cité au rapport de recherche | Date de publication | Membre(s) de la famille de brevet(s) | Date de publication |
|---|---|---|---|
| EP 1598666 A | 23-11-2005 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *Journal of mass spectrometry,* Juillet 2002, vol. 37, 748, 754
- *IEEE transactions on signal processing,* Novembre 2006, vol. 54 (11), 4133-4145
- *International Journal of mass spectrometry,* 01 Avril 2002, vol. 215 (1-3), 175-193